# EUROPÄISCHE PATENTSCHRIFT

(11) **EP 1 118 497 B1**
(45) Veröffentlichungstag und Bekanntmachung des Hinweises auf die Patenterteilung: **19.05.2004**
(21) Anmeldenummer: 00126562.8
(22) Anmeldetag: 12.12.2000
(51) Int. Cl.: B60N 2/00

(54) **Sitzplatte für einen Fahrzeugsitz**
Vehicle seat
Siège de véhicule

(30) Priorität: 15.01.2000 DE 10001445
(43) Veröffentlichungstag der Anmeldung: 25.07.2001
(73) Patentinhaber: Volkswagen Aktiengesellschaft, 38436 Wolfsburg (DE)
(72) Erfinder: Stahl, Arne, 38518 Gifhorn (DE); Michniacki, Matthias, Dipl.-Ing., 38440 Wolfsburg (DE)
(74) Vertreter: Schneider, Henry, Dipl.-Ing.

(56) Entgegenhaltungen:
- EP-A- 0 552 388
- EP-A- 0 604 240
- EP-A- 0 967 114
- DE-A- 1 654 400
- DE-A- 3 532 608

## Beschreibung

Die Erfindung betrifft einen Fahrzeugstz gemäß dem Oberbegriff des Patentanspruchs 1.

Eine aus der DE 35 32 608 A1 bekannte Sitzplatte dieses Aufbaues besteht aus zwei getrennten Plattenbereichen, von denen einer, nämlich der im Sitz vordere, um eine an seinem hinteren Ende vorgesehene querverlaufende Achse durch eine von ihm übergriffene Neigungsverstellvorrichtung schwenkbar ist. Dadurch ist es möglich, einen vorderen Teil der Sitzfläche relativ zum Rest derselben in der Höhe zu verstellen. Der hintere Bereich der Sitzplatte nimmt an den Verstellbewegungen in keiner Weise teil, so dass sich in Abhängigkeit von der Einstellung des vorderen Bereichs der Sitzplatte in der unmittelbaren Umgebung der einander zugekehrten Enden der beiden Plattenbereiche ein mehr oder weniger scharfer Knick ergibt. Bei dem Stand der Technik wird dies durch Unterteilung des oberhalb der Sitzplatte verlaufenden Sitzpolsters an dieser Stelle berücksichtigt.

Aus EP 0 604 240 A1 ist ein Bettuntergestell bekannt, das mehrteilig ausgebildet ist, wobei in Längsrichtung Stützbereiche vorgesehen sind, die jeweils über zusätzliche flexible Querelemente miteinander verbunden sind.

Der Erfindung liegt die Aufgabe zugrunde, einen Fahrzeugsitz mit eine gattungsgemäße Sitzplatte zu schaffen, die ohne Beeinträchtigung der erwünschten Verstellmöglichkeit nicht nur selbst einen einfacheren Aufbau besitzt, sondern auch den Aufbau des Sitzes insgesamt vereinfacht und örtlich hohe Beanspruchungen vermeidet.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung ermöglicht also die einteilige Ausbildung der Sitzplatte, ohne daß auf die relative Schwenkbarkeit der verschiedenen Plattenbereiche verzichtet werden muß. Komplizierte Scharnieranordnungen erübrigen sich, da die relative Schwenkbarkeit der aneinandergrenzenden Plattenbereiche allein durch geeignet profilierte Zonen der Sitzplatte selbst gewährleistet ist. Diese Zonen sind nämlich so profiliert, daß dort der Biegewiderstand der Sitzplatte verringert ist. Die einteilige Sitzplatte bietet die vorteilhafte Möglichkeit, Zusatzeinrichtungen, wie Gewichtssensoren und Ventilatoren, über die gesamte Sitzfläche vorzusehen.

Besonders vorteilhaft ist die Ausgestaltung dieser Zonen in der Weise, daß mehrere quer zur Schwenkrichtung verlaufende Rinnen ein mäanderartiges Querschnittsprofil bilden. Dadurch ist eine hohe örtliche Beanspruchung bei Relatiwerschwenkungen der aneinandergreifenden Plattenbereiche vermieden. Daher erübrigt sich auch eine Unterteilung des Polsters an dieser Stelle.

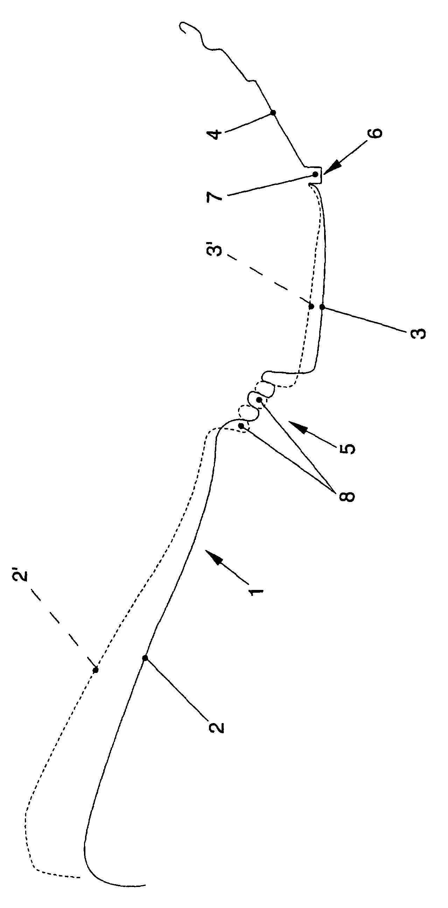

Ein Ausführungsbeispiel der Erfindung wird im folgenden anhand der Zeichnung erläutert, die - bezogen auf das Fahrzeug - einen Längsschnitt durch eine Sitzplatte zeigt.

Die allgemein mit 1 bezeichnete Sitzplatte enthält drei relativ zueinander schwenkbare Plattenbereiche 2, 3 und 4. Der Bereich 4 ist an einen Fahrzeugrahmen beispielsweise angeschraubt. Der vordere Plattenbereich 2 ist abgestützt auf einer an sich bekannten Neigungsverstellvorrichtung, beispielsweise nach Art der aus der eingangs genannten Offenlegungsschrift bekannten Vorrichtung. Dadurch ist es möglich, die beiden Plattenbereiche 2 und 3 beispielsweise in höhere Lagen 2' und 3' relativ zu dem hintersten Bereich 4 zu verschwenken, wodurch eine sich fast über die gesamte Länge der Sitzplatte 1 erstreckende Änderung der Neigung der Sitzfläche erzielt wird. Diese Sitzfläche wird gebildet durch ein nicht dargestelltes Polster auf der Sitzplatte 1.

Zwischen den aneinandergrenzenden Plattenbereichen 2, 3 und 4 erkennt man Zonen 5 und 6 verringerten Biegewiderstands in der Zeichenebene. Diese Zonen werden gebildet durch ein querverlaufendes rinnenförmiges Profil 7 im Falle der Zone 6 sowie eine Vielzahl von rinnenförmigen Profilen 8 im Falle der Zone 5; diese rinnenartigen Profile 8 bilden in ihrer Gesamtheit, wie die Figur zeigt, ein mäanderartiges Querschnittsprofil, das bei der Verschwenkung auftretende Beanspruchungen über einen relativ großen Längenbereich der Sitzplatte 1 und damit des gesamten Sitzes verteilt.

Die Erfindung bietet nicht nur den Vorteil einer Verringerung der Beanspruchungen im Sitz, sondern vergrößert auch den Sitzkomfort, da die Neigungsverstellung über einen größeren Längenbereich des Sitzes erfolgt.

## Patentansprüche

1. Fahrzeugsitz mit einer Sitzplatte, die ein Sitzpolster trägt und die zumindest zwei relativ zueinander schwenkbare Plattenbereiche enthält, von denen einer auf einer Neigungsverstellvorrichtung abgestützt ist, **dadurch gekennzeichnet, dass** die Plattenbereiche (2, 3, 4) zu einer einteiligen Sitzplatte (1) zusammengefasst sind, die zwischen den Plattenbereichen (2, 3, 4) zumindest eine durch Profilierung gewonnene Zone (5, 6) verringerten Biegewiderstands enthält.

2. Fahrzeugsitz nach Anspruch 1, **dadurch gekennzeichnet, dass** die Profilierung sich senkrecht zur Schwenkebene erstreckende Rinnen (7, 8) enthält.

3. Fahrzeugsitz nach Anspruch 2, **dadurch gekennzeichnet, dass** die Rinnen (8) senkrecht zu ihrer Erstreckung ein mäanderartiges Querschnittsprofil bilden.

## Claims

1. Motor vehicle seat with a seating panel, which carries seating upholstery and which provides at least two panel regions capable of rotation relative to one another, of which one is supported on an inclination adjustment device, **characterised in that** the panel regions (2, 3, 4) are combined to form a one-piece seating panel (1), which provides, between the panel regions (2, 3, 4), at least one zone (5, 6) of reduced resistance to bending achieved through profiling.

2. Motor vehicle seat according to claim 1, **characterised in that** the profiling provides grooves (7, 8) extending perpendicular to the plane of rotation.

3. Motor vehicle seat according to claim 2, **characterised in that** the grooves (8) form a meandering cross-sectional profile perpendicular to their extension.

## Revendications

1. Siège de véhicule avec un bloc d'assise revêtu d'un rembourrage d'assise, et comportant au moins deux zones de bloc pouvant être pivotées l'une par rapport à l'autre, dont l'une prend appui sur un dispositif de réglage d'inclinaison, **caractérisé en ce que** les zones de bloc (2, 3, 4) sont regroupées en un bloc d'assise (1) d'un seul tenant, qui comprend entre les zones de bloc (2, 3, 4) au moins une zone (5, 6) de résistance réduite à la flexion obtenue par profilage.

2. Siège de véhicule selon la revendication 1, **caractérisé en ce que** le profilage comporte des rigoles (7, 8) qui s'étendent perpendiculairement au plan de pivotement.

3. Siège de véhicule selon la revendication 2, **caractérisé en ce que**, perpendiculairement à leur extension, les rigoles (8) forment un profil en section transversale de type méandre.
